Europäisches Patentamt

European Patent Office

Office européen des brevets

(19)

(11) **EP 0 614 240 B1**

(12) **FASCICULE DE BREVET EUROPEEN**

(45) Date de publication et mention
de la délivrance du brevet:
**17.12.1997 Bulletin 1997/51**

(51) Int Cl.⁶: **H01M 10/40**

(21) Numéro de dépôt: **94400434.0**

(22) Date de dépôt: **01.03.1994**

(54) **Générateur électrochimique rechargeable au lithium**

Aufladbarer lithiumenthaltender elektrochemischen Stromgenerator

Rechargeable lithium containing electrochemical generator

(84) Etats contractants désignés:
**DE FR GB**

(30) Priorité: **02.03.1993 FR 9302396**

(43) Date de publication de la demande:
**07.09.1994 Bulletin 1994/36**

(73) Titulaire: **ALCATEL ALSTHOM COMPAGNIE
GENERALE D'ELECTRICITE**
**75008 Paris (FR)**

(72) Inventeurs:
 • **Perton, Françoise**
  **F-86190 Beruges (FR)**
 • **Baudry, Sylvie**
  **F-86240 Fontaine le Comte (FR)**
 • **Porcheron, Annie**
  **F-86240 Smarves (FR)**

(74) Mandataire: **Laroche, Danièle et al**
**c/o ALCATEL ALSTHOM,**
**Département de Propriété Industrielle,**
**30, avenue Kléber**
**75116 Paris (FR)**

(56) Documents cités:
 EP-A- 0 482 287            EP-A- 0 490 048
 FR-A- 2 641 130            US-H- 1 076

 • PATENT ABSTRACTS OF JAPAN vol. 17, no. 272
  (E-1371) 26 Mai 1993 & JP-A-05 013 088 (SANYO
  ELECTRIC CO LTD) 22 Janvier 1993
 • PATENT ABSTRACTS OF JAPAN vol. 15, no. 204
  (E-1071) (4732) 24 Mai 1991 & JP-A-03 055 769
  (YUASA BATTERY CO LTD)
 • PATENT ABSTRACTS OF JAPAN vol. 16, no. 441
  (E-1264) 14 Septembre 1992 & JP-A-04 155 775
  (MATSUSHITA ELECTRIC IND CO)

## Description

La présente invention concerne un générateur électrochimique rechargeable au lithium capable de fournir une puissance élevée en régime rapide, même lors d'une utilisation à basse température.

Les électrolytes classiques utilisés dans ces générateurs au lithium sont constitués d'un mélange de solvants organiques associé à un sel de lithium. Le mélange de solvants organiques est généralement composé d'un mélange d'esters et d'éthers permettant d'associer des solvants à forte constante diélectrique et des solvants de faible viscosité. Mais la recherche de meilleures performances s'oriente actuellement vers l'utilisation de matériaux cathodiques qui nécessitent l'emploi d'électrolytes capables de résister à des potentiels d'oxydation élevés.

Dans plusieurs brevets (EP-0 482 287, EP-0 490 048 et USP-5,192,629) sont décrit des générateurs électrochimiques dont l'électrolyte comporte un mélange d'un carbonate cyclique et d'un carbonate linéaire. Ces mélanges présentent des conductivités faibles (environ 30% de moins que les mélanges classiques), et le rendement de cyclage du lithium dans ces électrolytes est peu élevé. Les performances et la durée de vie de ces générateurs sont limitées.

On connait également un générateur à cathode polymère contenant un électrolyte composé d'un mélange de carbonates (FR-2 641 130). La densité de courant maximale que peut supporter une telle cathode est de l'ordre de $100\mu A/cm^2$. Le générateur obtenu est de très faible puissance, ce qui limite considérablement ses possibilités d'utilisation.

La présente invention a pour but de procurer un générateur secondaire au lithium dont les performances en cyclage en régime rapide, en particulier à basse température, sont plus élevées que les générateurs connus.

L'objet de la présente invention est un électrolyte pour générateur rechargeable à anode de lithium comportant une anode de lithium pur ou allié ou de carbone lithié, une cathode d'oxyde métallique et un électrolyte comprenant un mélange de solvants organiques aprotiques et un sel de lithium, caractérisé par le fait que ledit mélange est composé de:

- 20% à 40% en volume de carbonate de propylène,
- 10% à 20% en volume de carbonate d'éthylène,
- et 50% à 70% en volume de carbonate de diméthyle.

Par la présence de carbonate de propylène (PC), on obtient de meilleures performances aux basses températures jusqu'à -40°C. La stabilité du lithium dans l'électrolyte, donc la conservation de la charge pendant le stockage, et le rendement de cyclage du lithium ou du carbone lithié sont améliorés par une teneur en carbonate d'éthylène (EC) d'au moins 10% en volume. Le EC provoque la formation d'une couche passivante qui protège l'anode. Au-delà de 20%, la viscosité de l'électrolyte devient trop élevée et les performances du générateur chutent.

La résistance exceptionnelle du carbonate de diméthyle (DMC) à l'oxydation confère une particulière stabilité à l'électrolyte lorsqu'il est utilisé avec un matériau cathodique à haut potentiel d'oxydation. La présence de DMC, dans une proportion d'au moins 50% en volume permet une bonne imprégnation en électrolyte du séparateur et des électrodes et limite la formation de dendrites sur l'électrode de lithium. L'utilisation de DMC augmente la conductivité de l'électrolyte et procure un rendement de cyclage du lithium plus élevé. Pour atteindre un fonctionnement satisfaisant à une densité de courant importante en particulier à basse température, il faut rechercher le maximum de conductivité de l'électrolyte. De manière surprenante, on a constaté qu'en ajoutant à du DMC de 15% à 50% en volume d'un mélange de PC et de EC, on obtenait des valeurs de conductivité nettement plus élevées que lorsque l'on ajoute seulement soit du PC soit du EC. Pour conserver un niveau de performances suffisant à basse température, il n'est pas souhaitable de dépasser 85% de DMC.

Selon une variante préférentielle, le mélange comprend 20% en volume de carbonate de propylène PC, 20% en volume de carbonate d'éthylène EC et 60% en volume de carbonate de diméthyle. Cette composition du mélange de solvants permet de limiter la perte de capacité à 40% en passant de la température ambiante à -30°C.

Selon une autre variante, le mélange comprend 15% en volume de carbonate de propylène PC, 15% en volume de carbonate d'éthylène EC et 70% en volume de carbonate de diméthyle.

Selon une autre variante, le mélange comprend 20% en volume de carbonate de propylène PC, 10% en volume de carbonate d'éthylène EC et 70% en volume de carbonate de diméthyle.

Selon une autre variante, le mélange comprend 30% en volume de carbonate de propylène PC, 10% en volume de carbonate d'éthylène EC et 60% en volume de carbonate de diméthyle.

Selon encore une autre variante, le mélange comprend 40% en volume de carbonate de propylène PC, 10% en volume de carbonate d'éthylène EC et 50% en volume de carbonate de diméthyle. Avec cette composition du mélange de solvants, la perte de capacité n'est que de 30% entre la température ambiante et -30°C.

Le sel de lithium est choisi parmi l'hexafluoroarsénate de lithium $LiAsF_6$, l'hexafluorophosphate de lithium $LiPF_6$, le tétrafluoroborate de lithium $LiBF_4$, le perchlorate de lithium $LiClO_4$, le trifluorométhanesulfonate de lithium $LiCF_3SO_3$, le bis(trifluorométhanesulfone)imide de lithium $LiN(CF_3SO_2)_2$ (noté LiTFSI), ou le bis(trifluorométhanesulfone)méthide

de lithium LiC(CF$_3$SO$_2$)$_3$, et leurs mélanges.

La concentration du sel de lithium est supérieure à 1 mole par litre dudit mélange de solvants. De préférence la concentration du sel est comprise entre 1 mole/litre et 2 moles/litre.

La cathode comprend un matériau choisi parmi les oxydes lithiés du nickel, du cobalt, et du manganèse. Ces matériaux autorisent le fonctionnement du générateur à fortes densités de courant.

L'anode comprend un matériau choisi parmi le lithium, les alliages du lithium avec 15% à 20% en poids d'aluminium, les alliages du lithium avec 15% à 35% en poids de zinc, et les matériaux carbonés à insertion de lithium.

D'autres caractéristiques et avantages de la présente invention apparaîtront à la lecture des exemples suivants, donnés bien entendu à titre illustratif mais nullement limitatif, et dans le dessin annexé où:

- la figure 1 représente un générateur selon la présente invention,
- la figure 2 montre la capacité déchargée au cours du cyclage d'un générateur selon l'invention, analogue à celui représenté sur la figure 1 et d'un générateur de l'art antérieur; le nombre de cycle N est donné en abcisse et en ordonnée la capacité déchargée C$_d$ est exprimée en Ah/Kg;
- la figure 3 représente une autre variante d'un générateur selon la présente invention,
- la figure 4 montre les courbes de décharge à deux températures différentes d'un générateur électrochimique selon l'invention, analogue à celui représenté sur la figure 3;
- la figure 5 est analogue à la figure 4 pour une variante de la composition de l'électrolyte; sur les figures 4 et 5, est donnée en abcisse la capacité C$_t$ du générateur en mAh et en ordonnée sa tension V en Volts;
- la figure 6 montre les courbes de décharge à trois températures différentes d'un générateur électrochimique selon l'invention,
- la figure 7 est analogue à la figure 6 pour un générateur de l'art antérieur; sur les figures 6 et 7, est donnée en abcisse le temps de décharge t du générateur en minutes et en ordonnée sa tension V en Volts.

## EXEMPLE 1    Art antérieur

On réalise un électrolyte connu selon l'art antérieur à partir d'un mélange de solvants comprenant 20% en volume de PC, 20% en volume de EC et 60% en volume de diméthoxyéthane DME. Puis on ajoute dans le mélange le sel de lithium bis(trifluorométhane sulphone)imide (LiTFSI) à raison de 1,5 mole/litre du mélange de solvants.

Une cellule de test est assemblée qui comprend une électrode de travail en acier inoxydable de 1cm$^2$, une contre-électrode en lithium et l'électrolyte précédemment préparé. L'électrode de référence est un fil de lithium. Sur les courbes intensité/potentiel, tracées par voltampérométrie cyclique entre 2 volts et 4,5 volts, les densités de courant suivantes (en $\mu$A/cm$^2$) sont relevées:

| Volts: | 3,6 | 3,8 | 4,0 | 4,2 | 4,4 | 4,5 |
|---|---|---|---|---|---|---|
| $\mu$A/cm$^2$: | 0,046 | 0,07 | 0,16 | 1,168 | 13,6 | 25,6 |

On constate que les densités de courant augmentent notablement pour des potentiels supérieurs à 4V, signe d'une dégradation de l'électrolyte à ces potentiels.

## EXEMPLE 2

Selon la présente invention, on réalise un mélange A de solvants comprenant 20% en volume de PC, 20% en volume de EC et 60% en volume de DMC, auquel on ajoute 1,5 mole/litre du sel de lithium LiTFSI pour obtenir l'électrolyte. La conductivité de cet électrolyte mesurée à 20°C est de 9,5.10$^{-3}$ $\Omega^{-1}$.cm$^{-1}$.

Une cellule de test analogue à celle décrite dans l'exemple 1 est assemblée qui comprend l'électrolyte précédemment réalisé. Sur les courbes intensité/potentiel tracées par voltampérométrie cyclique entre 2V et 4,5V, les densités de courant suivantes sont relevées:

| Volts: | 3,6 | 3,8 | 4,0 | 4,2 | 4,4 | 4,5 |
|---|---|---|---|---|---|---|
| $\mu$A/cm$^2$: | 0,05 | 0,08 | 0,15 | 0,31 | 1,41 | 3,08 |

Les densités de courant mesurées dans cet électrolyte restent peu élevées, même au-delà de 4V, ce qui traduit la très bonne stabilité de l'électrolyte à ces potentiels.

EXEMPLE 3

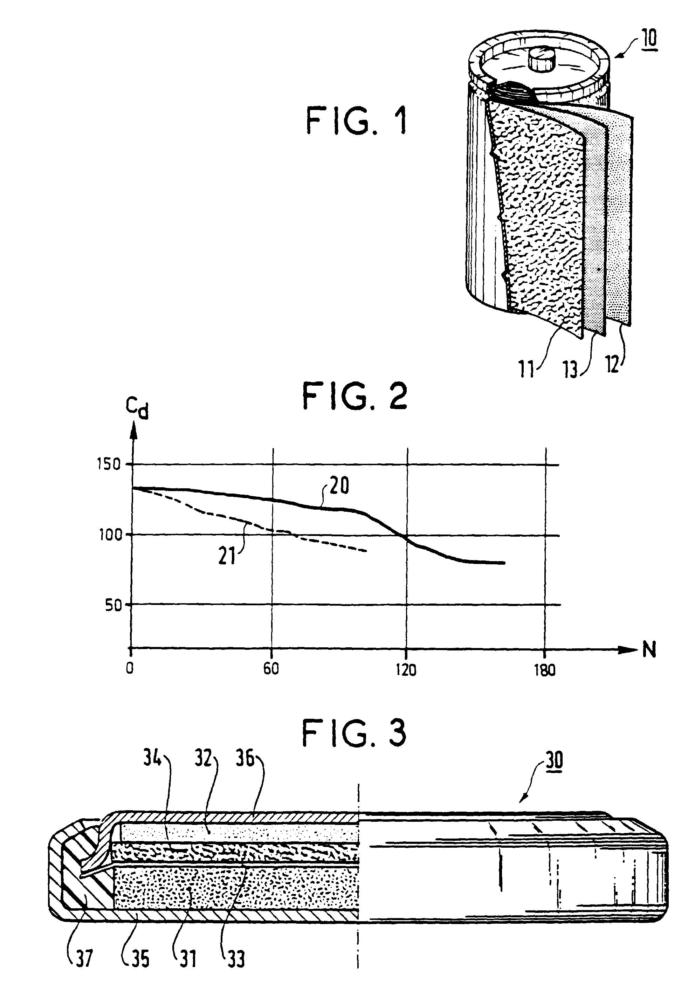

On réalise un générateur électrochimique rechargeable au lithium selon la présente invention. Ce générateur, représenté sur la figure 1, est cylindrique de hauteur 50mm et de diamètre 25,5mm. Le générateur 10 comprend une anode 11 en alliage de lithium comportant 15% en poids d'aluminium, une cathode 12 et un séparateur 13 microporeux en polypropylène. La cathode 12 est composée d'un matériau contenant de l'oxyde de nickel lithié $LiNiO_2$, du carbone (15% en poids du matériau) et un liant, ce matériau est déposé sur un collecteur de courant en aluminium. Ces composants sont spiralés et imprégnés de l'électrolyte réalisé dans l'exemple 2.

Le générateur obtenu est alors testé à température ambiante dans les conditions suivantes:

- charge: $I_c$ = 100mA jusqu'à 4,1V,
- décharge: $I_d$ = 1A jusqu'à 2,6V.

Les résultats sont présenté de la manière suivante:

- N est le nombre de cycles réalisés jusqu'à ce que la capacité restituée $C_d$ soit inférieure ou égale à la moitié de la capacité initiale $C_i$ équivalente à la masse de lithium actif après la première charge,
- $C_{Td}$ est la capacité totale déchargée au cours de ce cyclage exprimée en Ah,
- R est le rendement du cyclage calculé par rapport au lithium exprimé en %,
- F.O.M. est la "figure of merit" définie par le rapport $\frac{C_{Td}}{C_i}$.

La capacité déchargée au cours du cyclage est montrée par la courbe 20 de la figure 2. Le test est effectué trois fois et les résultats obtenus sont regroupés ci-dessous:

| n° de test | 1 | 2 | 3 |
|---|---|---|---|
| N : | 159 | 159 | 159 |
| $C_{Td}$ : | 222 | 230 | 234 |
| R : | 97 | 97 | 97 |
| F.O.M. : | 29 | 30 | 30 |

La perte totale de capacité sur 100 cycles n'est que de 16% de la capacité initiale, ce qui traduit une bonne tenue en cyclage de l'électrolyte et une durée de vie accrue du générateur selon l'invention.

A titre de comparaison un générateur, analogue à celui représenté sur la figure 1 mais contenant l'électrolyte de l'art antérieur réalisé dans l'exemple 1, est également testé de la même manière. La capacité déchargée au cours du cyclage est montrée par la courbe 21 de la figure 2. Le test est effectué trois fois et les résultats obtenus sont regroupés ci-dessous:

| n° de test | 1 | 2 | 3 |
|---|---|---|---|
| N : | 65 | 104 | 65 |
| $C_{Td}$ : | 97 | 143 | 96 |
| R : | 92 | 95 | 92 |
| F.O.M. : | 13 | 19 | 13 |

La perte totale de capacité sur 100 cycles est de 33% de la capacité initiale, ce qui traduit une dégradation importante de l'électrolyte pour ce mode de cyclage.

EXEMPLE 4    Art antérieur

On réalise deux mélanges binaires de solvants selon l'art antérieur comportant 40% en volume de PC ou de EC et 60% en volume de DMC auxquels on ajoute le sel de lithium LiTFSI à raison de 1 mole/litre du mélange de solvants.

La conductivité, mesurée à 20°C, de l'électrolyte comportant le mélange de solvants PC 40% - DMC 60% est de $8,3.10^{-3} \ \Omega^{-1}.cm^{-1}$.

Une cellule de test est assemblée comportant deux électrodes: l'une de lithium, l'autre en nickel sur laquelle est préalablement déposée une quantité connue $Q_i$ de lithium correspondant à 1mAh. Le séparateur est en polypropylène microporeux. A chaque cycle, une quantité $Q_c$ de lithium, inférieure à $Q_i$, est mise en jeu. Le nombre total de cycles réalisés N permet de calculer le rendement de cyclage R par rapport au lithium par la formule:

$$( 1 - \frac{Q_i - Q_c}{N\,Q_c} ) \times 100$$

Les rendements de cyclage sont calculés pour les deux électrolytes préparés précédemment:

PC 40% - DMC 60% : 85,7%
EC 40% - DMC 60% : 86,2%

EXEMPLE 5

Une cellule de test est assemblée, analogue à celle décrite dans l'exemple 4, pour effectuer un cyclage du lithium dans l'électrolyte selon l'invention réalisé dans l'exemple 2, comprenant le mélange A de solvants composé de 20% en volume de PC, 20% en volume de EC et 60% en volume de DMC, auquel on ajoute 1,5 mole/litre du sel de lithium LiTFSI. On obtient un rendement de cyclage de 90% par rapport au lithium dans cet électrolyte, rendement supérieur à ceux calculés pour les mélanges de deux carbonates selon l'art antérieur décrits de l'exemple 4.

EXEMPLE 6        Art antérieur

On réalise plusieurs mélanges de solvants selon l'art antérieur auxquels on ajoute le sel de lithium $LiAsF_6$ à raison de 1 mole/litre du mélange de solvants. Les mélanges préparés comprennent en volume:

- mélange J: 30% de PC et 70% de DMC
- mélange K: 30% de EC et 70% de DMC
- mélange L: 35% de PC, 35% de EC et 30% de DMC

La conductivité des électrolytes obtenus à partir de ces mélanges est mesurée à 20°C. Les résultats sont les suivants:

mélange J: $8,6.10^{-3}$ $\Omega^{-1}$.cm$^{-1}$
mélange K: $9,8.10^{-3}$ $\Omega^{-1}$.cm$^{-1}$
mélange L: $8,6.10^{-3}$ $\Omega$-1.cm-1

Et à 0°C, l'électrolyte préparé à partir du mélange L a pour conductivité: $4,7.10$-3 $\Omega$-1.cm-1

EXEMPLE 7

On réalise un électrolyte selon la présente invention en préparant un mélange de solvants comportant 15% en volume de PC, 15% en volume de EC et 70% en volume de DMC. Puis on ajoute au mélange le sel de lithium $LiAsF_6$ à raison de 1 mole/litre du mélange de solvants.

La conductivité de cet électrolyte mesurée à 20°C est de $11,2.10^{-3}$ $\Omega^{-1}$.cm$^{-1}$. Elle est plus élevée que pour les mélanges selon l'art antérieur décrits dans l'exemple 6.

EXEMPLE 8

Afin d'obtenir des électrolytes selon la présente invention, on réalise plusieurs mélanges de solvants comprenant en volume:

- mélange A: 20% de PC, 20% de EC et 60% de DMC,
- mélange B: 20% de PC, 10% de EC et 70% de DMC,
- mélange C: 30% de PC, 10% de EC et 60% de DMC,
- mélange D: 40% de PC, 10% de EC et 50% de DMC,

auxquels on ajoute 1 mole/litre du sel de lithium LiTFSI.

Les électrolytes comportant les mélanges de solvants B et C se solidifient dès que la température descend à -30°C, celui correspondant au mélange A se solidifie vers -40°C, et celui correspondant au mélange D se solidifie vers -50°C.

La conductivité de ces électrolytes est mesurée à température ambiante et à basses températures. Les valeurs obtenues, exprimées en $10^{-3}\ \Omega^{-1}.cm^{-1}$, sont les suivantes:

| température | 20°C | 0°C | -20°C | -30°C | -40°C |
|---|---|---|---|---|---|
| mélange A | 9,5 | 6,6 | 3,8 | 1,3 | - |
| mélange B | 8,1 | 5,6 | 3,1 | - | - |
| mélange C | 8,2 | 5,5 | 3,1 | - | - |
| mélange D | 8,9 | 5,7 | 3,3 | 2,1 | 1,2 |

Le mélange D présente la conductivité la plus élevée et la meilleure tenue à très basse température.

EXEMPLE 9

Selon la présente invention, on réalise un générateur électrochimique rechargeable de type bouton, analogue à celui représenté sur la figure 3. Ce générateur 30, contient une cathode 31 à base d'oxyde de nickel lithié $LiNiO_2$, une anode 32 en alliage Li-Al, un séparateur 33 microporeux en polypropylène et un séparateur réservoir 34 en fibre de polypropylène sous forme de feutre. L'ensemble est disposé dans une coupelle 35 fermée de manière étanche par l'intermédiaire d'un joint 37.

Deux électrolytes sont préparés à partir des mélanges A et D de solvants préparésdans l'exemple 8, auxquels on ajoute le sel de lithium LiTFSI à raison de 1,5 mole/litre du mélange de solvants. Chacun des deux électrolytes est introduit dans un générateur analogue à celui représenté sur la figure 3. Le test suivant est effectué à température ambiante et à basse température:

- charge à 0,25mA/cm2 jusqu'à 4,1V,
- décharge à 0,5mA/cm2 jusqu'à 3V à température ambiante et jusqu'à 2V à -30°C.

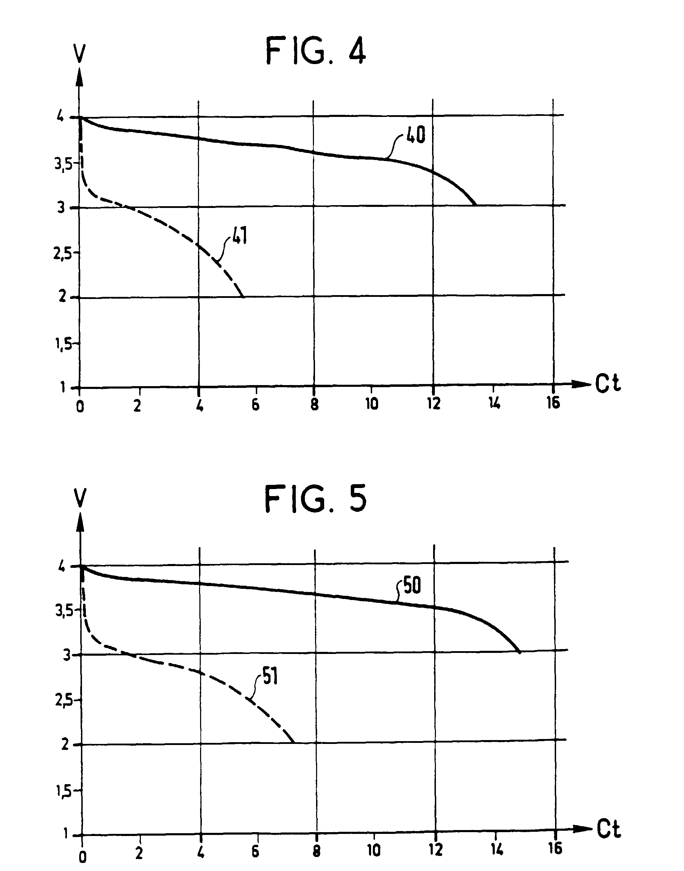

Sur la figure 4, la courbe 40 représente la décharge réalisée à température ambiante, et la courbe 41 celle réalisée à -30°C pour la cellule contenant l'électrolyte à base du mélange A de solvants.

La figure 5 montre les courbes de décharges à température ambiante (courbe 50) et à -30°C (courbe 51) de la cellule comportant l'électrolyte réalisé à partir du mélange D de solvants.

Par rapport à capacité déchargée à la température ambiante, la perte de capacité mesurée lors de la décharge à -30°C est de 62% pour l'électrolyte basé sur le mélange A, et seulement de 55% pour l'électrolyte préparé à partir du mélange D.

EXEMPLE 10

On réalise un générateur électrochimique rechargeable au lithium selon la présente invention, analogue au générateur représenté sur la figure 1 mais de dimensions différentes et comportant une anode à base de carbone. Le générateur est de hauteur 42,4mm et de diamètre 16,6mm. Il comprend une anode constituée d'un mélange de 1,5g de carbone et 15% en poids de liant déposé sur un collecteur de courant en cuivre, et une cathode contenant 3,60g de $LiNiO_2$.

Dans le mélange A de solvants, préparé dans l'exemple 2, on ajoute le sel de lithium $LiPF_6$ à raison de 1 mole/litre du mélange de solvants. On introduit alors dans un générateur analogue à celui décrit précédemment 4,50g de cet électrolyte.

Le générateur obtenu a une capacité d'environ 500mAh. Il est alors testé à différentes températures dans les conditions suivantes:

- charge à température ambiante: $I_c$ = 500mA jusqu'à 4,1V,
- décharge à différentes températures: $I_d$ = 250mA jusqu'à 2,5V.

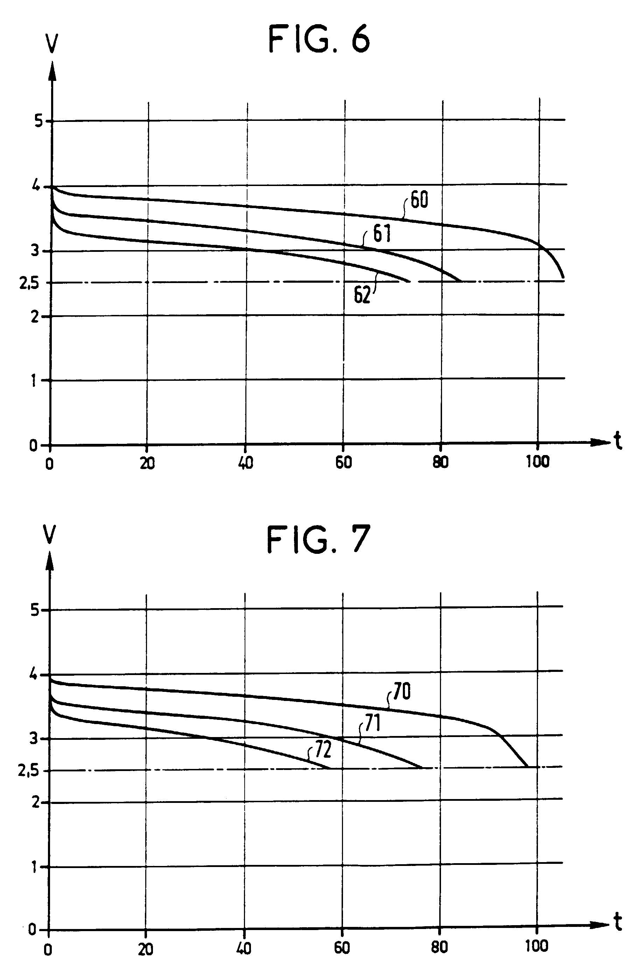

Sur la figure 6 sont portées les courbes de décharges 60, 61, et 62 obtenues respectivement à température ambiante, à -10°C et à -20°C.

A titre de comparaison, on réalise un électrolyte selon l'art antérieur en préparant un mélange de solvants comportant 50% en volume de EC et 50% en volume de DMC. Puis on ajoute au mélange le sel de lithium $LiPF_6$ à raison de 1 mole/litre du mélange de solvants. On introduit alors dans un générateur analogue à celui décrit précédemment 4,50g de cet électrolyte.

Ce générateur est évalué dans les mêmes conditions que ci-dessus. Sur la figure 7 sont portées les courbes de décharges 70, 71, et 72 obtenues respectivement à température ambiante, à -10°C et à -20°C.

Les résultats des mesures de capacités déchargées jusqu'à 2,5V sont rassemblés ci-dessous:

| température de décharge | EC/DMC 50/50 | PC/EC/DMC 20/20/60 | |
|---|---|---|---|
| | capacité mAh | capacité mAh | gain +% |
| 20°C | 396 | 437 | 10 |
| -10°C | 312 | 354 | 13 |
| -20°C | 237 | 300 | 26 |

A régime rapide et très basse température, le générateur selon la présente invention permet un gain de plus du quart de la capacité par rapport à un générateur analogue mais contenant un électrolyte selon l'art antérieur.

## Revendications

1. Générateur électrochimique rechargeable au lithium comportant une anode de lithium pur ou allié ou de carbone lithié, une cathode d'oxyde métallique et un électrolyte comprenant un mélange de solvants organiques aprotiques et un sel de lithium, caractérisé par le fait que ledit mélange est composé de:

   - 20% à 40% en volume de carbonate de propylène,
   - 10% à 20% en volume de carbonate d'éthylène,
   - et 50% à 70% en volume de carbonate de diméthyle.

2. Générateur selon la revendication 1, dans lequel ledit mélange comprend 20% en volume de carbonate de propylène, 20% en volume de carbonate d'éthylène et 60% en volume de carbonate de diméthyle.

3. Générateur selon la revendication 1, dans lequel ledit mélange comprend 20% en volume de carbonate de propylène, 10% en volume de carbonate d'éthylène et 70% en volume de carbonate de diméthyle.

4. Générateur selon la revendication 1, dans lequel ledit mélange comprend 30% en volume de carbonate de propylène, 10% en volume de carbonate d'éthylène et 60% en volume de carbonate de diméthyle.

5. Générateur selon la revendication 1, dans lequel ledit mélange comprend 40% en volume de carbonate de propylène PC, 10% en volume de carbonate d'éthylène EC et 50% en volume de carbonate de diméthyle.

6. Générateur selon l'une des revendications précédentes, dans lequel ledit sel de lithium est choisi parmi l'hexafluoroarsénate de lithium, l'hexafluorophosphate de lithium, le tétrafluoroborate de lithium, le perchlorate de lithium, le trifluorométhanesulfonate de lithium, le bis(trifluorométhanesulfone)imide de lithium, ou le bis(trifluorométhanesulfone)méthide de lithium, et leurs mélanges.

7. Générateur selon la revendication 6, dans lequel la concentration dudit sel de lithium est supérieure à 1 mole par litre dudit mélange de solvants.

8. Générateur selon l'une des revendications précédentes, dans lequel ladite cathode comprend un matériau choisi parmi les oxydes lithiés du nickel, du cobalt, et du manganèse.

9. Générateur selon l'une des revendications précédentes, dans lequel ladite anode comprend un matériau choisi parmi le lithium, les alliages du lithium avec 15% à 20% en poids d'aluminium, les alliages du lithium avec 15% à 35% en poids de zinc, et les matériaux carbonés à insertion de lithium.

## Patentansprüche

1. Wiederaufladbarer elektrochemischer Lithium-Generator mit einer Anode aus reinem oder legiertem Lithium oder aus lithium-haltigem Kohlenstoff, einer Kathode aus Metalloxid und einem Elektrolyten, der ein Gemisch aus aprotischen organischen Lösungsmitteln und ein Lithiumsalz umfaßt, dadurch gekennzeichnet, daß sich das Gemisch aus:

- 20 bis 40 Vol.-% Propylencarbonat,
- 10 bis 20 Vol.-% Ethylencarbonat
- und 50 bis 70 Vol.-% Dimethylcarbonat zusammensetzt.

**2.** Generator nach Anspruch 1, bei dem das Gemisch 20 Vol.-% Propylencarbonat, 20 Vol.-% Ethylencarbonat und 60 Vol.-% Dimethylcarbonat enthält.

**3.** Generator nach Anspruch 1, bei dem das Gemisch 20 Vol.-% Propylencarbonat, 10 Vol.-% Ethylencarbonat und 70 Vol.-% Dimethylcarbonat enthält.

**4.** Generator nach Anspruch 1, bei dem das Gemisch 30 Vol.-% Propylencarbonat, 10 Vol.-% Ethylencarbonat und 60 Vol.-% Dimethylcarbonat enthält.

**5.** Generator nach Anspruch 1, bei dem das Gemisch 40 Vol.-% Propylencarbonat PC, 10 Vol.-% Ethylencarbonat EC und 50 Vol.-% Dimethylcarbonat enthält.

**6.** Generator nach einem der vorhergehenden Ansprüche, bei dem das Lithiumsalz unter Lithiumhexafluoroarsenat, Lithiumhexafluorophosphat, Lithiumtetrafluoroborat, Lithiumperchlorat, Lithiumtrifluormethansulfonat, Lithiumbis (trifluormethansulfon)imid oder Lithiumbis(trifluormethansulfon)methid und ihren Mischungen ausgewählt ist.

**7.** Generator nach Anspruch 6, bei dem die Konzentration des Lithiumsalzes größer als 1 Mol pro Liter des Lösungsmittelgemisches ist.

**8.** Generator nach einem der vorhergehenden Ansprüche, bei dem die Kathode ein Material enthält, das unter den lithiumhaltigen Oxiden des Nickels, des Cobalts und des Mangans ausgewählt ist.

**9.** Generator nach einem der vorhergehenden Ansprüche, bei dem die Anode ein Material enthält, das unter Lithium, den Legierungen des Lithiums mit 15 bis 20 Gew.-% Aluminium, den Legierungen des Lithiums mit 15 bis 35 Gew.-% Zink und den kohlenstoffhaltigen Materialien mit Lithiumeinlagerung ausgewählt ist.

**Claims**

**1.** A lithium rechargeable electrochemical cell comprising an anode of pure or alloyed lithium or of lithium-containing carbon, a cathode of metal oxide, and an electrolyte comprising a mixture of aprotic organic solvents and a lithium salt, characterized by the fact that said mixture is made up of:

5% to 40% by volume of propylene carbonate;
10% to 20% by volume of ethylene carbonate; and
50% to 85% by volume of dimethyl carbonate.

**2.** A cell according to claim 1, in which said mixture comprises 20% by volume of propylene carbonate, 20% by volume of ethylene carbonate, and 60% by volume of dimethyl carbonate.

**3.** A cell according to claim 1, in which said mixture comprises 15% by volume of propylene carbonate, 15% by volume of ethylene carbonate, and 70% by volume of dimethyl carbonate.

**4.** A cell according to claim 1, in which said mixture comprises 30% by volume of propylene carbonate, 10% by volume of ethylene carbonate, and 60% by volume of dimethyl carbonate.

**5.** A cell according to claim 1, in which said mixture comprises 40% by volume of propylene carbonate (PC), 10% by volume of ethylene carbonate (EC), and 50% by volume of dimethyl carbonate.

**6.** A cell according to any preceding claim, in which said lithium salt is selected from: lithium hexafluoroarsenate, lithium hexafluorophosphate, lithium tetrafluoroborate, lithium perchlorate, lithium trifluoromethanesulfonate, lithium bis(trifluoromethanesulfone)imide, and lithium bis(trifluoromethanesulfone)methide, and mixtures thereof.

7.  A cell according to claim 6, in which the concentration of said lithium salt is greater than 1 mole/liter of said solvent mixture.

8.  A cell according to any preceding claim, in which said cathode comprises a material selected from: lithium-containing oxides of nickel, of cobalt, and of manganese.

9.  A cell according to any preceding claim, in which said anode comprises a material selected from: lithium, lithium alloys with 15% to 20% by weight of aluminum, lithium alloys with 15% to 35% by weight of zinc, and lithium insertion carbon-containing materials.

## FIG. 1

10

11  13  12

## FIG. 2

$C_d$

150

100

50

20

21

0   60   120   180   N

## FIG. 3

34  32  36   30

37  35  31  33

# FIG. 4

# FIG. 5

## FIG. 6

## FIG. 7